(19) Europäisches Patentamt / European Patent Office / Office européen des brevets

(11) **EP 2 721 303 B1**

(12) **EUROPEAN PATENT SPECIFICATION**

(45) Date of publication and mention
of the grant of the patent:
**20.03.2019 Bulletin 2019/12**

(21) Application number: **12800352.2**

(22) Date of filing: **31.05.2012**

(51) Int Cl.:
*F04D 15/00* (2006.01)　　*E03F 5/22* (2006.01)
*G05B 13/02* (2006.01)

(86) International application number:
**PCT/SE2012/050581**

(87) International publication number:
**WO 2012/173552 (20.12.2012 Gazette 2012/51)**

(54) **METHOD FOR CONTROLLING AT LEAST A PART OF A PUMP STATION**

VERFAHREN ZUR STEUERUNG MINDESTENS EINES TEILS EINER PUMPSTATION

PROCÉDÉ POUR COMMANDER AU MOINS UNE PARTIE D'UNE STATION DE POMPAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.06.2011　SE 1150548**

(43) Date of publication of application:
**23.04.2014　Bulletin 2014/17**

(73) Proprietor: **Xylem IP Holdings LLC**
**Rye Brook, NY 10573 (US)**

(72) Inventors:
• **LARSSON, Martin**
**S-174 41 Sundbyberg (SE)**

• **FULLEMANN, Alexander**
**S-117 27 Stockholm (SE)**
• **MÖKANDER, Jürgen**
**S-191 78 Sollentuna (SE)**

(74) Representative: **Brann AB**
**P.O. Box 3690**
**Drottninggatan 27**
**103 59 Stockholm (SE)**

(56) References cited:
WO-A2-2009/053923　US-A- 5 742 500
US-A- 5 742 500　　　US-A1- 2006 071 666
US-A1- 2007 154 322　US-A1- 2009 204 245
US-A1- 2011 081 255

## Description

### Technical Field of the Invention

The present invention relates generally to a method for controlling at least a part of a pump station. In particular, the present invention relates to a method for controlling at least a part of a pump station comprising a number of speed controlled pumps, the method being arranged to minimize the specific energy consumption $E_{spec}$ of said at least a part of a pump station.

### Background of the Invention and Prior Art

The cost of driving the pumps of a pump station intended for waste water, sewage, surface water, etc., is very large. Long way back in time, the pump of the pump station was started at highest speed when the liquid level of the pump station had risen to a predetermined pump start liquid level, and the pump was allowed to operate until a predetermined pump stop liquid level had been reached, but it was realized that this way of controlling was very expensive. As a solution, speed controlled pumps were introduced, for instance frequency controlled pumps wherein the current feed frequency to the pump was selected to a, from an energy consumption point-of-view, more optimal value determined via, for instance, calculations and/or tests. These calculations and/or tests resulted in miscellaneous, system dependent and/or pump dependent, curve charts from which the energy consumption per pumped volume in relation to, for instance, the current feed frequency or pump speed of the pump can be derived, said optimal value being a derived minimum point. The introduction of speed controlled pumps and utilization of optimum current feed frequency/pump speed based on the nominal curve chart of the pump entailed significant cost savings, as well as spared the pumps since they rarely or never were operated at maximum speed.

However, speed control based on the nominal curve chart of a pump is impaired by certain disadvantages. It is a disadvantage that the curve chart of a pump model is not necessarily exactly the same for each pump entity within this pump model; furthermore, the nominal curve chart of the pump model is static over time, which is not true for the real curve chart of the specific pump entity. More precisely, the real curve chart of the pump entity will be changed concurrently with the parts of the pump being worn, which entails that the optimum current feed frequency/pump speed of the pump entity does not coincide with the optimum current feed frequency/pump speed of the pump model. In addition, the design of the pump station and the surrounding pipe system will make effect on the real curve chart of the pump entity, which effect may be difficult or impossible to anticipate and/or calculate.

Today, there are devices that measure pumped liquid volume and energy consumption at specific current feed frequencies/pump speeds, see, for instance, WO2009/053923. However, it is expensive and complicated to measure pumped liquid volume and there is a need of extra equipment intended only for the purpose of measuring pumped liquid volume.

US5742500A discloses a method of optimising the speed of a pump within a pump station to lower its energy consumption per unit throughput.

US2011/081255A discloses the use of a gradient descent method to optimise the speed of a pump to lower a specific energy consumption of the pump.

### Brief Description of Objects and Features of the Invention

The present invention aims at obviating the above-mentioned disadvantages and failings of previously known methods for controlling at least a part of a pump station and at providing an improved method. A primary object of the invention is to provide an improved method for controlling at least a part of a pump station of the initially defined type, which does not require that the pumped liquid volume needs to be measured.

Another object of the present invention is to provide a method for controlling at least a part of a pump station, which is self-regulating concurrently with the parts of the pump being worn and replaced, as well as is self-regulating based on the design of the pump station and the surrounding pipes.

Another object of the present invention is to provide a method that in a preferred embodiment indirectly takes the size of the pumped volume into consideration without measuring the same.

### Brief Description of the Features of the Invention

According to the invention, at least the primary object is achieved by the method defined by claim 1.

Accordingly, the present invention is based on the understanding that the sum of the pumped liquid volume during a certain period of time, for instance 24 h or a multiple of 24 h, is more or less constant as seen over a longer period of time.

Preferred embodiments of the present invention are furthermore defined in the dependent claims.

Preferably, the set of parameters comprises said first value A1 of said quantity and the associated first specific energy consumption $E_{spec}1$, as well as said second value A2 of said quantity and the associated second specific energy consumption $E_{gpec}2$.

Preferably, the first value A1 of said quantity consists of the pump speed V1 or a first current feed frequency F1, and the second value A2 of said quantity consists of the pump speed V2 or a second current feed frequency F2, and the third value A3 of said quantity consists of the pump speed V3 or a third current feed frequency F3.

Additional advantages and features of the invention are seen in the other dependent claims as well as in the following, detailed description of preferred embodiments.

## Brief Description of the Drawings

A more complete understanding of the abovementioned and other features and advantages of the present invention will be clear from the following, detailed description of preferred embodiments, reference being made to the accompanying drawings, wherein:

Fig. 1   is a schematic illustration of a pump station,
Fig. 2   is a flow chart showing a preferred embodiment of the method according to the invention,
Fig. 3   is a flow chart showing an alternative embodiment of the method according to the invention,
Fig. 4   is a flow chart showing the sub method "Find V3",
Fig. 5   is a diagram that shows schematically the relationship between specific energy consumption $E_{spec}$ and pump speed $V_{pump}$, and
Fig. 6   is a diagram that shows schematically how the pump station liquid level h is changed over time T.

## Detailed Description of Preferred Embodiments

Initially, it should be pointed out that the term "specific energy consumption $E_{spec}$" as used in the claims as well as in the description relates to and is a measure of energy consumption per unit of time of one or more pumps, or of one or more pump stations, etc. Herein, specific energy consumption is calculated according to $E_{spec} = k * E$, wherein E is real energy consumption during a certain elapsed period of time and k is a time parameter that is a measure of said elapsed period of time, preferred embodiments of the determination of the time parameter k being described later in the context of different embodiments. In the simplest embodiment, k is equal to 1.

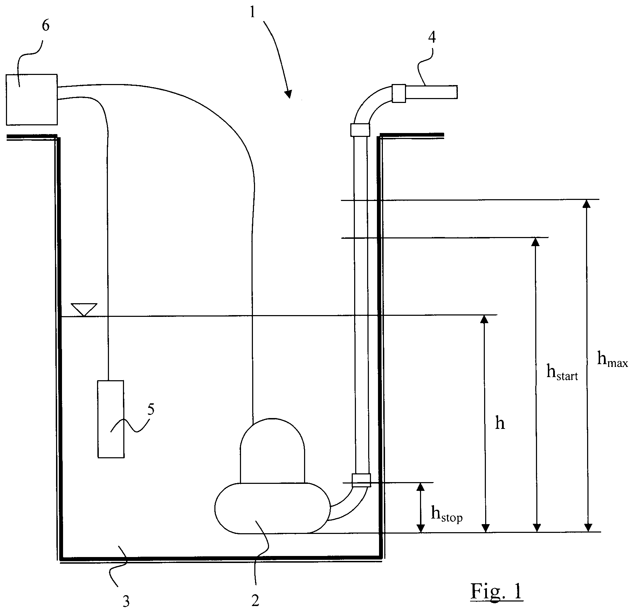

In Figure 1, a pump station is shown, generally designated 1, comprising a number of speed controlled pumps 2, i.e., one or more and usually two, arranged to pump liquid from a sump 3 included in the pump station 1 to an outlet pipe 4 and further away from the pump station 1. Further, the pump station 1 comprises at least one level instrument 5 arranged to determine the pump station liquid level h; it should be pointed out that the level instrument 5 may be an individual device that is operatively connected to an external control unit 6, be operatively connected to one of said number of speed controlled pumps 2, be built-in in one of said number of speed controlled pumps 2, etc. Said number of speed controlled pumps 2 are preferably operatively connected to the external control unit 6 with the purpose of allowing regulation of the pump speed, alternatively at least one of said number of speed controlled pumps 2 may comprise a built-in control unit (not shown).

With the wording "speed controlled", all feasible ways to change the speed of a pump are embraced, above all current feed frequency control is intended, by means of a frequency converter, VFD, that is built-in in a pump or that is external, the external VFD preferably being arranged at the external control unit 6. However, also internally or externally controlled supply voltage control is intended, internal mechanical brake that preferably acts on the drive shaft of the pump, etc. Accordingly, on an overall level of the invention, it is not of central importance how the speed of the pump is controlled, only that the speed of the pump can be regulated/controlled.

The method according to the invention is aimed at controlling at least a part of such a pump station 1 that comprises a number of speed controlled pumps 2, with the purpose of minimizing the specific energy consumption $E_{spec}$ of said at least a part of a pump station 1. Pump station 1 should in this connection be seen as a defined installation to which incoming liquid arrives and from which outgoing liquid is pumped. The pump station should, as regards the present invention, be regarded irrespective of the type of liquid and irrespective from where the liquid comes and where the liquid should be pumped. With the wording "a number of variable-speed controlled pumps", an integral number of pumps 2 is intended where the speed of the individual pump can be controlled, preferably by the fact that the current feed frequency F to each pump can be controlled with the purpose of changing the speed of the specific pump, the speed being proportionate to the current feed frequency. Accordingly, such a pump station 1 may comprise one or more pumps, at least one pump 2 of which is speed controlled. In the case when the pump station comprises a plurality of speed controlled pumps 2, suitable alternation between them may be done, which is not handled herein.

Fundamental to the present invention is that the pumped liquid volume is not measured or employed in connection with the determination of specific energy consumption $E_{spec}$. The invention is instead based on the sum of the pumped liquid volume during a certain period of time, usually 24 h, being more or less constant as seen over a longer time. In this patent application, said period of time is henceforth denominated operating period and has preferably the time length n*24 h, wherein n is a positive integer. It should be realized that the operating period also may have another time length without the general idea of the present invention being deviated from, and/or that the time length of the operating period varies over the year.

It should be pointed out that the method according to the invention can be implemented for one or more complete pump stations, which directly or indirectly communicate with each other, for one pump or for several pumps, which directly or indirectly communicate with each other. The method may, for instance, be implemented in a built-in control unit in a pump 2 or in the external control unit 6 of a control cabinet, the external control unit 6 being operatively connected to the pump 2. Henceforth, the invention will be described implemented in a pump 2 of a pump station 1 if nothing else is stated, but the corresponding applies when the invention is implemented in an external control unit 6.

The pump station 1 has a pump station liquid level, which is designated h and which in the present patent application is the distance between the liquid level in the sump 3 and the inlet of the pump 2 (see Figure 1), the pump station liquid level h is directly coupled to the real lifting height of the pump 2, which increases with falling pump station liquid level h. When the sump 3 is refilled with liquid, the pump station liquid level h rises, and when the pump 2 is active and pumps out liquid, the pump station liquid level h falls. It should be pointed out that the sump 3 can be refilled with liquid at the same time as the pump 2 is active and pumps out liquid.

Throughout this publication, the operating period in progress is also denominated the third operating period t3, which has been preceded by a fictitious or elapsed first operating period t1 and a fictitious or elapsed second operating period t2. Fictitious operating periods are used when elapsed/actual operating periods have not yet occurred, for instance upon start-up or restart of the pump, the pump station, the register of the pump station, etc. The first operating period t1, the second operating period t2 and the third operating period t3 do not necessarily need to be in immediate succession, but may be separated by one or more operating periods for which parameters have not been registered. Accordingly, when the third operating period t3 has been completed and parameters have been registered, the same will accordingly be regarded as a second operating period t2 and a new operating period is running, possibly a new third operating period t3, the previous second operating period will constitute the first operating period t1, and the previous first operating period will fall out of the register and/or possibly be filed in order to allow analysis of the progress of the pump station 1.

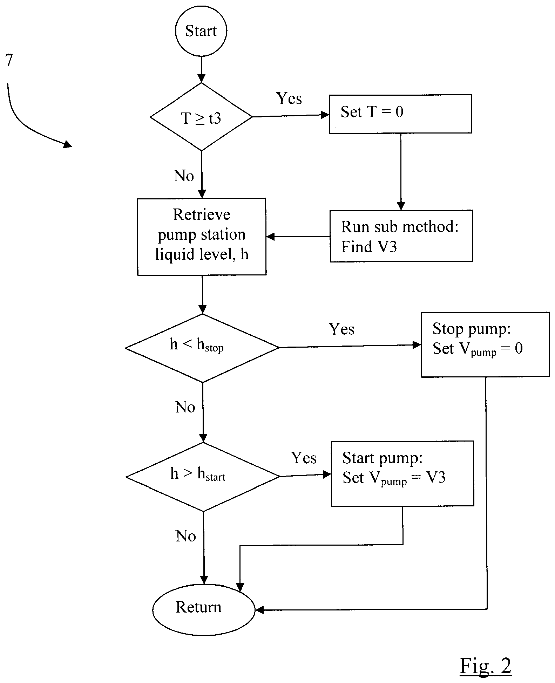

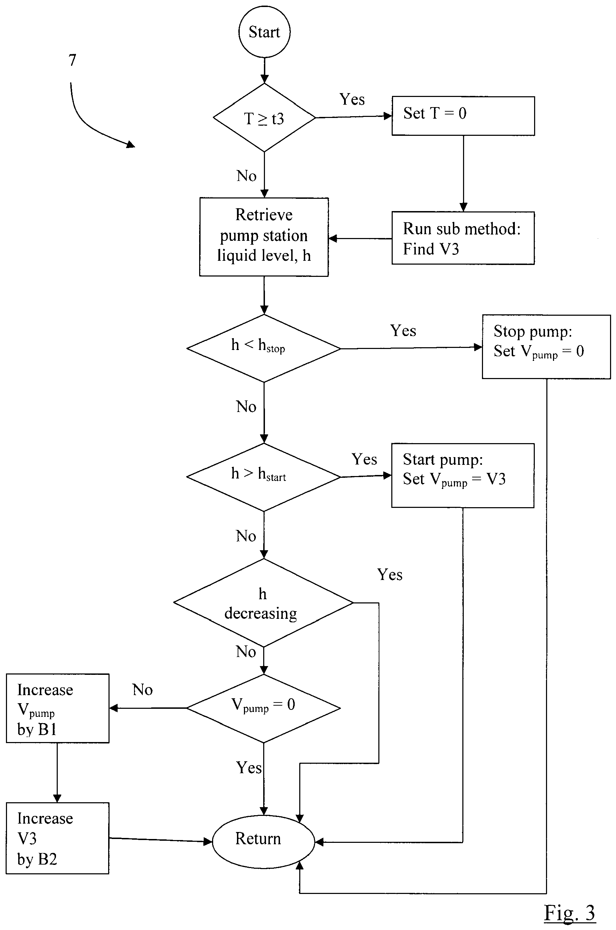

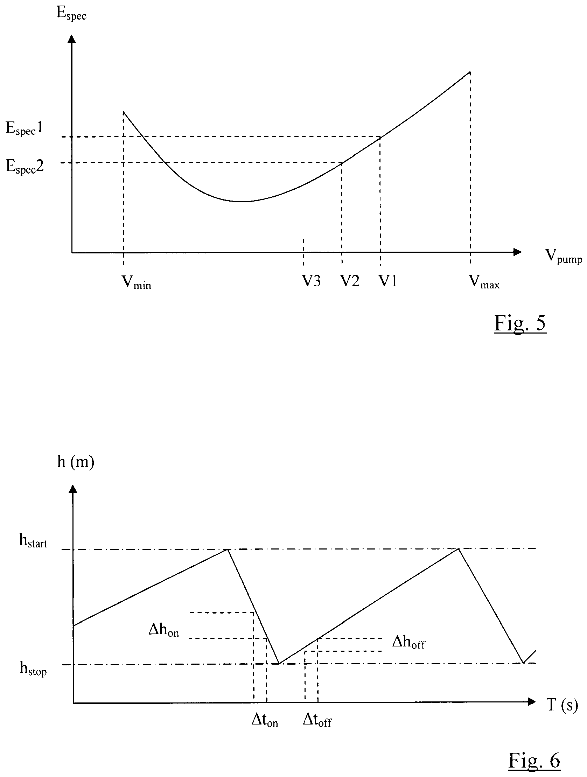

In Figures 2 and 3, preferred embodiments of a method are shown, generally designated 7, for controlling at least a part of a pump station 1 comprising a number of frequency controlled pumps 2. It should be pointed out that the method 7 according to the invention may be expanded with one or more sub methods, and/or be run in parallel/sequentially with other control methods. In connection with the description below, also Figure 5 should be taken into consideration, but it should be appreciated that the curve drawn into Figure 5 not necessarily is registered and is not needed for the method according to the invention.

Reference is now made to Figures 2 and 3 and to the method steps that are common to the preferred embodiments. The method 7 starts and then a check is made if the pump station 1 is in the middle of a third operating period t3 in progress or if the third operating period t3 precisely has been completed, i.e., whether the condition $T \geq t3$ is satisfied, wherein T is an elapsed time of the operating period in progress. In connection with an operating period being completed and another one being initiated, the measurement of elapsed time T of the operating period in progress is set to zero. It should be pointed out that T also may be actual or absolute time and in that case, instead the relationship between actual time and a multiple of the third operating period is checked, i.e., for instance, every time the actual time strikes 00:00, a new operating period starts.

When an operating period precisely has been completed, the method 7 proceeds to a sub method, called "Find V3", which aims at finding optimum pump speed V3 of the third operating period t3 that just has been started or that will be started later, with the purpose of minimizing the specific energy consumption $E_{spec}$ of said at least a part of a pump station 1. The sub method "Find V3" will be described more in detail below after the overall method 7 has been described.

After the sub method "Find V3" or if the pump station 1 is in the middle of the third operating period t3 in progress, i.e., if the condition $T \geq t3$ is not satisfied, the method 7 continues to the next method step "Retrieve pump station liquid level, h".

The pump station liquid level h is determined by means of some form of customary level instrument arrangement, which may comprise one or more co-operating level instruments 5, for instance continuous and/or discrete level instruments. When the pump station liquid level h has been retrieved, a check is made if the pump station liquid level h in the sump 3 is lower than the liquid level that corresponds to a pump stop liquid level $h_{stop}$, i.e., whether the condition $h < h_{stop}$ is satisfied. If the condition $h < h_{stop}$ is satisfied, the pump speed $V_{pump}$ is set equal to zero and the possibly activated pump 2 is switched off, and the method 7 is terminated and returns to start. If the condition $h < h_{stop}$ is not satisfied, a check is made if the liquid level in the sump 3 is higher than the liquid level that corresponds to a pump start liquid level $h_{start}$, i.e., whether the condition $h > h_{start}$ is satisfied. If the condition $h > h_{start}$ is satisfied, the pump 2 is activated at a pump speed $V_{pump}$ that is equal to the present pump speed V3 of the third operating period t3 in progress, which earlier has been determined by means of the sub method "Find V3". If the condition $h > h_{start}$ is not satisfied or after the pump 2 has been activated at the pump speed V3, the method 7 is terminated and returns to start according to the preferred embodiment according to Figure 2.

According to the alternative embodiment according to Figure 3, a check is made if the pump station liquid level h in the sump 3 falls/decreases if the condition $h > h_{start}$ is not satisfied or after the pump 2 has been activated at the pump speed V3. If the pump station liquid level h falls, it shows that the pump 2 is active and pumps out liquid and that the liquid level in the sump 3 falls but that the pump stop liquid level $h_{stop}$ has not yet been reached. The method 7 is terminated and returns to start. It should be pointed out that the steps of checking the conditions $h < h_{stop}$ and $h > h_{start}$, together with the respec-

tive associated subsequent method step, can interchange place without the method in other respects being affected.

If the pump station liquid level h does not fall, a check is made if the pump is active, i.e., whether the speed $V_{pump}$ of the pump is different from zero. If the speed $V_{pump}$ of the pump is equal to zero, it indicates that the pump station liquid level h is between pump stop liquid level $h_{stop}$ and pump start liquid level $h_{start}$ and that the pump station is in a refill state in the operating period, after which the method 7 is terminated and returns to start. If the speed $V_{pump}$ of the pump is different from zero, normally it shows that the pump 2 is active and pumps out liquid but that the instantaneous liquid inflow to the pump station 1 is equal to or greater than the liquid outflow, alternatively it is an indication of the pump 2 not at all being active, for instance as a consequence of the same being broken, alternatively it is an indication of the pump speed being less than a smallest possible pump speed $V_{min}$ the pump 2 can have and still manage to pump liquid. When the pump station liquid level h does not fall, the pump speed $V_{pump}$ is increased by a parameter B1, preferably corresponding to a current feed frequency increase of 1-5 Hz, and in addition the present pump speed V3 of the third operating period t3 in progress is increased by a parameter B2, preferably corresponding to a current feed frequency increase of 0,1-0,5 Hz. Next, the method 7 is terminated and returns to start.

It should be pointed out that during one and the same operating period, according to the invention, the pump 2 is active several times. It should furthermore be pointed out that the pump station 1 may have a maximally allowed pump station liquid level $h_{max}$, and if this is reached, preferably the pump speed of the pump 2 is increased to a higher pump speed or to a maximally allowed pump speed $V_{max}$ to prevent the sump 3 from being flooded, and if this does not help, one or more further pumps are started, preferably at said maximally allowable pump speed $V_{max}$, at the present pump speed V3 of the third operating period t3 in progress, or at another suitable pump speed. If the pump station 1 comprises several pumps, the alternating ones may be active during one and the same operating period.

In connection with the third operating period t3 having been completed, in a preferred embodiment, the present pump speed V3 of the third operating period t3 and the present specific energy consumption $E_{spec}3$ of the third operating period t3 are registered. In an alternative embodiment, it is registered whether the pump speed V3 is greater or smaller than the pump speed V2 of the second operating period t2 and whether the specific energy consumption $E_{spec}3$ is greater or smaller than the specific energy consumption $E_{spec}2$ of the second operating period t2. Instead of the third pump speed V3, the corresponding third value A3 of an equivalent quantity may be used in registration. The equivalent quantity may be current feed frequency, supply voltage, mechanical brake power of the drive shaft of the pump, or another corresponding equivalent quantity. It should be pointed out that if the method 7 according to the invention during a third operating period t3 in progress needs to set the pump speed $V_{pump}$ to any value that differs from, for instance, zero and V3, preferably the parameters of this operating period should not be registered.

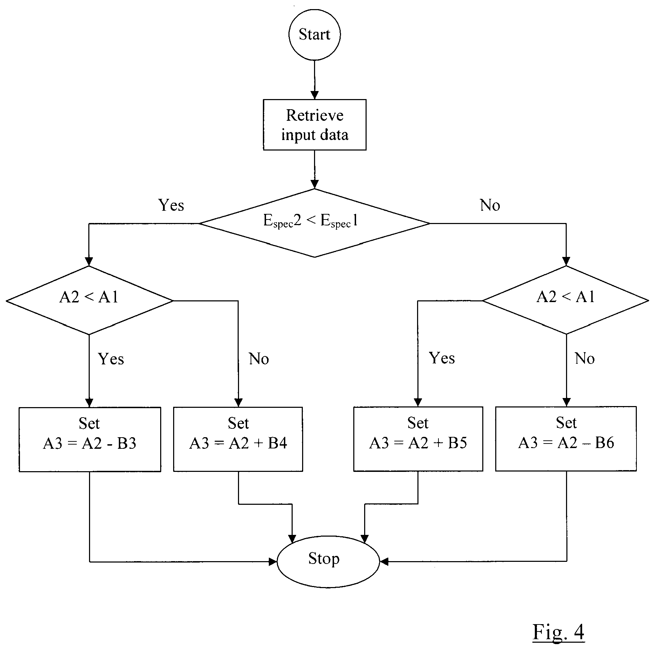

The sub method "Find V3" is shown in Figure 4 and begins with the step of obtaining/retrieving input data in the form of a set of parameters, this set of parameters may be set parameters corresponding to two fictitious operating periods, registered parameters corresponding to two elapsed operating periods, or a combination of set parameters corresponding to a fictitious operating period and registered parameters corresponding to an elapsed operating period. Parameters set by operator/pump manufacturers/programmers are, for instance, used in the initial actual operating periods of the pump station 1, until registered parameters are available.

Based on said set of parameters, the mutual relative relationship is then determined between a first value A1 of said quantity that corresponds to a first pump speed V1 and that is derived based on said set of parameters, which first value A1 relates to a fictitious or elapsed first operating period t1, and a second value A2 of said quantity that corresponds to a second pump speed V2 and that is derived from said set of parameters, which second value A2 relates to a fictitious or elapsed second operating period t2, and between a first specific energy consumption $E_{spec}1$ that is derived based on said set of parameters and that relates to said first operating period t1, and a second specific energy consumption $E_{spec}2$ that is derived from said set of parameters and that relates to said second operating period t2.

Based on said determined mutual relative relationships, output data is then determined in the form of a third value A3 of said quantity corresponding to a third pump speed V3 of a third operating period t3, which may be the operating period directly following the second operating period t2 or may be a coming operating period. The third value A3 of the quantity is set equal to A2-B3 if the conditions A2<A1 and $E_{spec}2<E_{spec}1$ are satisfied, equal to A2+B4 if the conditions A2>A1 and $E_{spec}2<E_{spec}1$ are satisfied, equal to A2+B5 if the conditions A2<A1 and $E_{spec}2>E_{spec}1$ are satisfied, and equal to A2-B6 if the conditions A2>A1 and $E_{spec}2>E_{spec}1$ are satisfied, wherein B3, B4, B5, and B6 are parameters of said quantity. Next, the sub method "Find V3" returns to the method 7.

The parameters B3, B4, B5, and B6, each of which constitutes the difference between the third value A3 and the second value A2, are preferably predetermined values, alternatively variables that, for instance, depend on the value of A2, the relationship between A1 and A2, and/or the relationship between $E_{spec}1$ and $E_{spec}2$, etc. The parameters B3, B4, B5, and B6 have preferably the same value, but it is feasible that the parameters B3, B4, B5, and B6 have different values with the purpose of preventing the sub method "Find V3" from jumping to and fro between two values around an optimum pump speed. In an alternative embodiment, the parameter B3 is equal to B5, which is different from B4, which in turn is equal to B6. Each of the parameters B3, B4, B5, and B6 corresponds preferably to a current feed frequency change that is greater than 0,5 Hz, and smaller than 5 Hz, preferably smaller than 2 Hz, and most preferably 1 Hz. Preferably, a current feed frequency change of 1 Hz corresponds to approximately a change of the pump speed of 2-5 percentage units, where the maximally allowable pump speed $V_{max}$ is used as the reference point 100 %. It is furthermore preferred that the parameters B3, B4, B5, and B6 are reduced, for instance halved or divided into three, if it turns out that the sub method "Find V3" jumps to and fro around an optimum pump speed. It should be pointed out that the above-mentioned parameter B2, when it is shown in the same quantity as the parameters B3, B4, B5, and B6, should be small in relation to B3, B4, B5, and B6, for instance in the order of less than 15 % of B3, B4, B5, and/or B6.

In preferred embodiments, the first value A1 of said quantity consists of the pump speed V1, a first current feed frequency F1, or a first supply voltage S1, and the second value A2 of said quantity consists of the pump speed V2, a second current feed frequency F2, or a second supply voltage S2, and the third value A3 of said quantity consists of the pump speed V3, a third current feed frequency F3, or a third supply voltage S3.

In a preferred embodiment, the above-mentioned set of parameters comprises said first value A1 of said quantity and the associated first specific energy consumption $E_{spec}1$, as well as said second value A2 of said quantity and the associated second specific energy consumption $E_{spec}2$. In an alternative embodiment, the set of parameters comprises, for instance, said second value A2 as well as the function of the curve segment that extends between the second value A2 and the first value A1, after which the above-mentioned mutual relative relationships can be determined. In an additional alternative embodiment, the set of parameters comprises the second value A2 and the first value A1, as well as the slope of the curve segment that extends between the two values of the quantity, after which the above-mentioned mutual relative relationships can be determined. It should be pointed out that there are further sets of parameters from which it is possible to determine the above-mentioned mutual relative relationships, even if not more embodiment examples are shown here. It should be pointed out that values from additional fictitious or elapsed operating periods may be used to check if the sub method "Find V3" jumps to and fro around an optimum pump speed.

Below, different ways to calculate the specific energy consumption $E_{spec}$ will be presented, more precisely how the time parameter k of the above-mentioned expression of the specific energy consumption $E_{spec}=k*E$ is calculated. $E_{spec}$ is essentially equal to consumed energy divided by pumped volume during a certain elapsed time, or equal to instantaneous power consumption divided by instantaneous flow. According to the invention, a time parameter k is used instead of instantaneous flow or pumped volume, and this time parameter may be equal to 1 or make allowance for the time length of the operating period, the vertical height between the pump start liquid level $h_{start}$ and the pump stop liquid level $h_{stop}$, the number of starts during an operating period, the time the pump has been active during an operating period, the time the pump has been inactive during an operating period, the speed of the liquid level, etc. Below, some examples will be shown, but the invention is not limited thereto.

According to a first variant, the length of an operating period is n*24 hours and the time parameter k is calculated according to k=1/(n*24). This variant is used when the inflow is predictable and almost constant for an operating period as seen over a longer period of time.

According to a second variant, the length of an operating period is n*24 hours and the time parameter k is calculated according to k=1/(c*(n*24)), wherein c is an equalization parameter. This variant is used when the inflow is less predictable and more irregular for an operating period as seen over a longer period of time.

Preferably, the equalization parameter c may be calculated according to $c=x_{on}/\sum t_{on}$, wherein $x_{on}$ is the number of times a pump has been activated during an elapsed operating period, and $\sum t_{on}$ is the cumulative time for which the pump has been active in the elapsed operating period.

Alternatively, the equalization parameter c may be calculated according to $c=\sum L/\sum t_{on}$, wherein L is the vertical height between the pump start liquid level $h_{start}$ and the pump stop liquid level $h_{stop}$ and $\sum L$ is the cumulative height that has been pumped out during an elapsed operating period, regardless the inflow when the pump 2 has been active. $\sum t_{on}$ is the cumulative time for which the pump has been active in the elapsed operating period.

According to a third variant, not part of the invention, the length of an operating period is s seconds, wherein s is a positive integer and the time parameter k is calculated according to k=1/(c*s), wherein c is the equalization parameter. See Figure 6, wherein $\Delta t_{on}$ is equal to $\Delta t_{off}$, each of which is equal to the length of the operating period, s seconds. Preferably, the length s seconds of the operating period is in the range of 60-120 s.

The equalization parameter c is preferably calculated according to $c=(\Delta h_{on} + \Delta h_{off})$, wherein $\Delta h_{on}$ is the pump station liquid level change during an elapsed operating period, which elapsed operating period takes place in connection with the end of an active period during which one of said number of speed controlled pumps 2 is active and which directly is followed by an inactive period during which said pump is inactive, and $\Delta h_{off}$ is the pump station liquid level change during a following operating period, which following operating period takes place in connection with the beginning of the directly following inactive period. In this variant, it is assumed that the inflow in the beginning of an inactive period is the same as the inflow in the end of the preceding active period. By adding $\Delta h_{on}$ and $\Delta h_{off}$, consideration is given to how large the inflow probably was when the pump 2 was active. $\Delta t_{on}$ and $\Delta t_{off}$ should be positioned as near as possible the instant of time when the pump station liquid level h reaches the pump stop liquid level $h_{stop}$, however $\Delta t_{on}$ should be sufficiently far from the instant of time when the pump station liquid level h reaches the pump stop liquid level $h_{stop}$ in order not to be influenced by so-called snooring effects of the pump 2, i.e., that the pump 2 sucks air, and $\Delta t_{off}$ should be sufficiently far from the instant of time when the pump station liquid level h reaches the pump stop liquid level $h_{stop}$ in order not to be influenced by so-called siphon effects of the outlet pipe 4, i.e., that liquid is pulled along in the outlet pipe 4 because of the inertia of the pumped liquid in spite of the pump 2 having been shut off, or reflux effect from the outlet pipe 4 when the pump 2 has been shut off.

According to a fourth variant, not part of the invention, which is a mixture of several of the above variants, an operating period comprises a period when the pump is active, i.e., $t_{on}$, and a period in which the pump is inactive, i.e., $t_{off}$; note, the mutual order is unimportant. $h_{on}$ is the pump station liquid level change during the period when the pump is active and $h_{off}$ is the pump station liquid level change during the period when the pump is inactive. In this fourth variant, it is assumed that the inflow during the inactive period of the pump is the same as the inflow during the active period of the pump. It should be pointed out that $t_{on}$ and $t_{off}$ do not need to be equally large.

Preferably, the length of an operating period according to this variant is equal to one pump cycle, and L is the vertical height between the pump start liquid level $h_{start}$ and the pump stop liquid level $h_{stop}$. Accordingly, in this preferred embodiment, each of $h_{on}$ and $h_{off}$ is equal to L, which implies that $t_{off}$ is the time it takes for the pump station liquid level h to rise from the pump stop liquid level $h_{stop}$ to the pump start liquid level $h_{start}$, $t_{on}$ is the time it takes for the pump station liquid level h to fall from the pump start liquid level $h_{start}$ to the pump stop liquid level $h_{stop}$.

The time parameter k is calculated according to $k=1/(c*t_{meas})$, wherein c is the equalization parameter and $t_{meas}$ is a subset of the period when the pump is active and during which consumed power is measured. Accordingly, $t_{meas}$ should be equal to or less than $t_{on}$. Furthermore, consumed energy E during the period $t_{meas}$ can be measured by instantaneous power being summed up during the period $t_{meas}$, alternatively, instantaneous power is measured some time during the period $t_{meas}$ and then the measured instantaneous power is multiplied by the time $t_{meas}$.

Generally, the equalization parameter c is calculated according to $c=(h_{off}/t_{off} + h_{on}/t_{on})$, and in the preferred embodiment, the equalization parameter c is consequently calculated according to $c=(L/t_{off} + L/t_{on})$, i.e., c is a measure of pumped out quantity of liquid during the period $t_{meas}$.

According to a fifth variant, which is a special variant of the above fourth variant and which is also not part of the invention, the length of an operating period is equal to one pump cycle and consumed energy is determined for the entire period in which the pump is active, i.e., $t_{meas}$ is equal to $t_{on}$. After simplification of the mathematical expression according to the fourth variant, the following is obtained.

Accordingly, a pump cycle comprises a period when the pump is active, i.e., $t_{on}$, and a period in which the pump is inactive, i.e., $t_{off}$, in other words, the length of the operating period is equal to $(t_{on} + t_{off})$. The time parameter k is calculated according to $k=1/(c*(t_{on} + t_{off}))$, wherein c is the equalization parameter. The length of a pump cycle is preferably in the range of 1-10 min, but may also amount to one or several hours. It should be pointed out that $t_{on}$ and $t_{off}$ do not need to be equally large.

Preferably, the equalization parameter c is calculated according to $c=L/t_{off}$, wherein L is the vertical height between the pump start liquid level $h_{start}$ and the pump stop liquid level $h_{stop}$. Furthermore, $t_{off}$ is the time for which the pump has been inactive during the elapsed pump cycle. In this variant, it is assumed that the inflow during the inactive period of the pump is the same as the inflow during the active period of the pump. According to said fifth variant, consumed energy E during the operating period/pump cycle can be measured, or an instantaneous power can be measured some time during the period of the pump cycle in which the pump is active, i.e., during $t_{on}$, and then the measured instantaneous power is multiplied by the time $t_{on}$ the pump has been active. According to a preferred embodiment, instantaneous power is measured at the end of the period of the pump cycle in which the pump is active.

The method 7 according to the invention may be implemented for controlling a pump, as described above. Furthermore, the method 7 may be implemented in a pump station comprising several variable-speed controlled pumps 2, where registration and control preferably takes place in the external control unit 6. The control may either be effected for the entire pump station 1 independently of which pump that has been active, or for each pump separately. When control is effected for the entire pump station 1, consideration is given to each registered operating period independently of which pump that has been active, which gives a faster movement toward the optimum speed for the individual pump than when the control is effected for each pump separately, as well as that the external control unit 6 does not need to know how many variable-speed controlled pumps 2 that are connected. The advantage of the control being effected for each pump separately is that the characteristic of the individual pump entity does not affect other pump entities, i.e., different types of pumps and differently old pumps can be used side by side. In an alternative implementation, registration and control are effected in a built-in control unit in each individual pump 2, preferably two such pumps may be operatively interconnected to interchange information about the latest known third pump speed V3.

Feasible Modifications of the Invention

The invention is not limited only to the embodiments described above and shown in the drawings, which only have the purpose of illustrating and exemplifying. This patent application is intended to cover all adaptations and variants of the preferred embodiments described herein, and consequently the present invention is defined by the wording of the accompanying claims. Accordingly, the equipment can be modified in all feasible ways within the scope of the accompanying claims.

It should also be pointed out that although the terms "speed control" and "pump speed" for the sake of simplicity have been used in the claims as well as in the description, it will be appreciated that also other equivalent values are included, such as current feed frequency control, supply voltage control, etc., which all aim at changing the speed of the pump, and which all have a unambiguous relationship to pump speed.

**Claims**

1. Method for controlling at least a part of a pump station (1) comprising a number of speed controlled pumps (2), the method (7) being arranged to minimize a specific energy consumption $E_{spec}$ of said at least a part of a pump station, wherein an individual pump (2) is operated to have a plurality of on/off cycles during an operating period (t1, t2, t3) having a predetermined length and the speed of the pump (V1, V2, V3) is constant and is the same each time the pump (2) is active during one and the same operating period (t1, t2, t3), wherein the method comprises a sub method (Find V3) that comprises the steps of:

   * obtaining input data in the form of a set of parameters associated with a fictitious or elapsed first operating period t1 and a fictitious or elapsed second operating period t2,
   * determining, based on said set of parameters, a mutual relative relationship between, on the one hand, a first value A1 of a quantity that is equivalent to a first pump speed V1 and that is derived based on said set of parameters, the first pump speed V1 being the speed of the pump when it is active during said first operating period t1, and a second value A2 of said quantity that is equivalent to a second pump speed V2 and that is derived from said set of parameters, the second pump speed V2 being the speed of the pump when it is active during said second operating period t2, and between, on the other hand, a first specific energy consumption $E_{spec}1$ that is derived from said set of parameters and from the energy consumed by the pump during said first operating period t1, and a second specific energy consumption $E_{spec}2$ that is derived from said set of parameters and from the energy consumed by the pump during said second operating period t2,

   * determining, based on said determined mutual relative relationships and on parameters B3, B4, B5, and B6 of said quantity, output data in the form of a third value A3 of said quantity that is equivalent to a third pump speed V3 of a third operating period t3, wherein

   A3 is set equal to A2-B3 if the conditions A2<A1 and $E_{spec}2<E_{spec}1$ are satisfied,
   A3 is set equal to A2+B4 if the conditions A2>A1 and $E_{spec}2<E_{spec}1$ are satisfied,
   A3 is set equal to A2+B5 if the conditions A2<A1 and $E_{spec}2>E_{spec}1$ are satisfied, and
   A3 is set equal to A2-B6 if the conditions A2>A1 and $E_{spec}2>E_{spec}1$ are satisfied.

2. Method according to claim 1, wherein the specific energy consumption of said at least a part of a pump station is given as a predetermined value $E_{spec}$ for a fictitious operating period or is calculated according to $E_{spec} = k*E$ for an elapsed operating period, where E is consumed energy by at least one of said number of frequency controlled pumps during said elapsed operating period and k is a time parameter, and wherein the value A of said quantity is given as a predetermined value for the fictitious operating period or is registered for said elapsed operating period.

3. Method according to claim 1 or 2, wherein the first value A1 of said quantity consists of the pump speed V1, the second value A2 of said quantity consists of the pump speed V2, and the third value A3 of said quantity consists of the pump speed V3.

4. Method according to claim 1 or 2, wherein the first value A1 of said quantity consists of a first current feed frequency F1, the second value A2 of said quantity consists of a second current feed frequency F2, and the third value A3 of said quantity consists of a third current feed frequency F3.

5. Method according to claim 1 or 2, wherein the first value A1 of said quantity consists of a first supply voltage S1, the second value A2 of said quantity consists of a second supply voltage S2, and the third value A3 of said quantity consists of a third supply voltage S3.

6. Method according to any one of the preceding claims, wherein the set of parameters comprises said first value A1 of said quantity and the associated first specific energy consumption $E_{spec}1$, as well as said second value A2 of said quantity and the associated second specific energy consumption $E_{spec}2$.

7. Method according to any one of the preceding claims, wherein the parameters B3, B4, B5, and B6 have predetermined values, each of which corresponds to a current feed frequency change that is greater than 0,5 Hz, and smaller than 5 Hz, preferably smaller than 2 Hz.

8. Method according to claim 7, wherein each of the parameters B3, B4, B5, and B6 corresponds to a current feed frequency change of 1 Hz.

9. Method according to claim 7 or 8, wherein the parameter B3 is equal to the parameter B5, and the parameter B4 is equal to the parameter B6.

10. Method according to claim 2, wherein the length of an operating period is n*24 h, where n is a positive integer, and wherein the time parameter k is calculated according to

$$k = \frac{1}{n * 24}$$

11. Method according to claim 2, wherein the length of an operating period is n*24 h, where n is a positive integer, and wherein the time parameter k is calculated according to $k = \dfrac{1}{c * (n * 24)}$, where c is an equalization parameter.

12. Method according to claim 11, wherein the equalization parameter c is calculated according to

$$c = \frac{x_{on}}{\sum t_{on}}$$

where $x_{on}$ is the number of times a pump has been activated during an elapsed operating period, and $\Sigma t_{on}$ is the cumulative time for which the pump has been active in the elapsed operating period.

**Patentansprüche**

1. Verfahren zur Steuerung mindestens eines Teils einer Pumpstation (1), die eine Anzahl von drehzahlgeregelten Pumpen (2) aufweist, wobei das Verfahren (7) zum Minimieren eines spezifischen Energieverbrauchs $E_{spec}$ des mindestens einen Teils der Pumpstation ausgelegt ist,

wobei eine einzelne Pumpe (2) so betrieben wird, dass sie in einem Betriebszeitraum (t1, t2, t3) mit einer vorbestimmten Länge mehrere Ein-/Aus-Zyklen aufweist und die Drehzahl der Pumpe (V1, V2, V3) konstant und bei jedem Mal, wenn die Pumpe (2) während ein und desselben Betriebszeitraums (t1, t2, t3) aktiv ist, die gleiche ist, wobei das Verfahren ein Teilverfahren (Find V3) aufweist, das die Schritte aufweist:

* Einholen von Eingangsdaten in Form eines Satzes von Parametern, die mit einem fiktiven oder verstrichenen ersten Betriebszeitraum t1 und einem fiktiven oder verstrichenen zweiten Betriebszeitraum t2 verbunden sind,
* auf der Grundlage des Satzes von Parametern erfolgendes Bestimmen einer gegenseitigen Beziehung zwischen einerseits:
einem ersten Wert A1 einer Größe, die mit einer ersten Pumpendrehzahl V1 gleichwertig ist und auf der Grundlage des Satzes von Parametern hergeleitet wird, wobei die erste Pumpendrehzahl V1 die Drehzahl der Pumpe ist, wenn diese während des ersten Betriebszeitraums t1 aktiv ist, und einem zweiten Wert A2 der Größe, die mit einer zweiten Pumpendrehzahl V2 gleichwertig ist und aus dem Satz von Parametern hergeleitet wird, wobei die zweite Pumpendrehzahl V2 die Drehzahl der Pumpe ist, wenn diese während des zweiten Betriebszeitraums t2 aktiv ist, und zwischen andererseits:
einem ersten spezifischen Energieverbrauch $E_{spec}1$, der aus dem Satz von Parametern und aus der Energie, die die Pumpe während des ersten Betriebszeitraums t1 verbraucht hat, hergeleitet wird und einem zweiten spezifischen Energieverbrauch $E_{spec}2$, der aus dem Satz von Parametern und aus der Energie, die die Pumpe während des zweiten Betriebszeitraums t2 verbraucht hat,
* auf der Grundlage der bestimmten gegenseitigen Beziehungen und von Parametern B3, B4, B5 und B6 der Größe erfolgendes Bestimmen von Ausgangsdaten in Form eines dritten Werts A3 der Größe, die mit einer dritten Pumpendrehzahl V3 eines dritten Betriebszeitraums t3 gleichwertig ist, wobei
A3 mit A2-B3 gleichgesetzt wird, wenn die Bedingungen A2<A1 und $E_{spec}2<E_{spec}1$ erfüllt sind,
A3 mit A2+B4 gleichgesetzt wird, wenn die Bedingungen A2>A1 und $E_{spec}2<E_{spec}1$ erfüllt sind,
A3 mit A2+B5 gleichgesetzt wird, wenn die Bedingungen A2<A1 und $E_{spec}2>E_{spec}1$ erfüllt sind, und
A3 mit A2-B6 gleichgesetzt wird, wenn die Bedingungen A2>A1 und $E_{spec}2>E_{spec}1$ erfüllt sind.

2. Verfahren nach Anspruch 1, wobei der spezifische Energieverbrauch des mindestens einen Teils einer Pumpstation als vorbestimmter Wert $E_{spec}$ für einen fiktiven Betriebszeitraum gegeben oder gemäß $E_{spec} = k*E$ für einen verstrichenen Betriebszeitraum berechnet wird, wobei E Energie ist, die von mindestens einer der Anzahl von frequenzgeregelten Pumpen während des verstrichenen Betriebszeitraums verbraucht wurde, und k ein Zeitparameter ist, und wobei der Wert A der Größe als vorbestimmter Wert für den fiktiven Betriebszeitraum gegeben oder für den verstrichenen Betriebszeitraum registriert wird.

3. Verfahren nach Anspruch 1 oder 2, wobei der erste Wert A1 der Größe aus der Pumpendrehzahl V1, der zweite Wert A2 der Größe aus der Pumpendrehzahl V2 und der dritte Wert A3 der Größe aus der Pumpendrehzahl V3 besteht.

4. Verfahren nach Anspruch 1 oder 2, wobei der erste Wert A1 der Größe aus einer ersten Stromzuführungsfrequenz F1, der zweite Wert A2 der Größe aus einer zweiten Stromzuführungsfrequenz F2 und der dritte Wert A3 der Größe aus einer dritten Stromzuführungsfrequenz F3 besteht.

5. Verfahren nach Anspruch 1 oder 2, wobei der erste Wert A1 der Größe aus einer ersten Versorgungsspannung S1, der zweite Wert A2 der Größe aus einer zweiten Versorgungsspannung S2 und der dritte Wert A3 der Größe aus einer dritten Versorgungsspannung S3 besteht.

6. Verfahren nach einem der vorstehenden Ansprüche, wobei der Satz von Parametern einen ersten Wert A1 der Größe und den zugehörigen ersten spezifischen Energieverbrauch $E_{spec}1$ sowie den zweiten Wert A2 der Größe und den zugehörigen zweiten spezifischen Energieverbrauch $E_{spec}2$ aufweist.

7. Verfahren nach einem der vorstehenden Ansprüche, wobei die Parameter B3, B4, B5 und B6 vorbestimmte Werte haben, von denen jeder einer Stromzuführungsfrequenzänderung entspricht, die größer als 0,5 Hz und kleiner als 5 Hz, bevorzugt kleiner als 2 Hz ist.

8. Verfahren nach Anspruch 7, wobei jeder der Parameter B3, B4, B5 und B6 einer Stromzuführungsfrequenzänderung von 1 Hz entspricht.

9. Verfahren nach Anspruch 7 oder 8, wobei der Parameter B3 gleich dem Parameter B5 und der Parameter B4 gleich dem Parameter B6 ist.

10. Verfahren nach Anspruch 2, wobei die Länge eines Betriebszeitraums n*24 h beträgt, wobei n eine positive ganze Zahl ist und wobei der Zeitparameter k berechnet wird gemäß

$$k = \frac{1}{n * 24}$$

11. Verfahren nach Anspruch 2, wobei die Länge eines Betriebszeitraums n*24 h beträgt, wobei n eine positive ganze Zahl ist und wobei der Zeitparameter k berechnet wird gemäß $k = \frac{1}{c * (n*24)}$, wobei c ein Ausgleichsparameter ist.

12. Verfahren nach Anspruch 11, wobei der Ausgleichsparameter c berechnet wird gemäß

$$c = \frac{x_{on}}{\sum t_{on}}$$

wobei $x_{on}$ die Häufigkeit ist, mit der die Pumpe während eines verstrichenen Betriebszeitraums aktiviert wurde, und $\Sigma t_{on}$ die Gesamtzeit ist, in der die Pumpe in dem verstrichenen Betriebszeitraum aktiv war.

**Revendications**

1. Procédé pour commander au moins une partie d'une station de pompage (1) comprenant un certain nombre de pompes (2) commandées en vitesse, le procédé (7) étant conçu pour réduire au minimum une consommation d'énergie spécifique $E_{spec}$ de ladite au moins une partie d'une station de pompage, dans lequel une pompe individuelle (2) fonctionne pour présenter une pluralité de cycles marche/arrêt pendant une période de fonctionnement (t1, t2, t3) présentant une longueur prédéterminée et la vitesse de la pompe (V1, V2, V3) est constante et est la même à chaque fois que la pompe (2) est active pendant la seule et même période de fonctionnement (t1, t2, t3), dans lequel le procédé comprend un sous-procédé (Find V3) qui comprend les étapes :

d'obtention de données d'entrée se présentant sous la forme d'un ensemble de paramètres associés à une première période de fonctionnement t1 fictive ou écoulée et à une deuxième période de fonctionnement t2 fictive ou écoulée, de détermination, sur la base dudit ensemble de paramètres, d'une relation relative mutuelle entre, d'une part, une première valeur A1 d'une quantité qui est équivalente à une première vitesse de pompe V1 et qui est dérivée sur la base dudit ensemble de paramètres, la première vitesse de pompe V1 étant la vitesse de la pompe lorsqu'elle est active pendant ladite première période de fonctionnement t1, et une deuxième valeur A2 de ladite quantité qui est équivalente à une deuxième vitesse de pompe V2 et qui est dérivée dudit ensemble de paramètres, la deuxième vitesse de pompe V2 étant la vitesse de la pompe lorsqu'elle est active pendant ladite deuxième période de fonctionnement t2, et entre, d'autre part, une première consommation d'énergie spécifique $E_{spec}1$ qui est dérivée dudit ensemble de paramètres et de l'énergie consommée par la pompe pendant ladite première période de fonctionnement t1, et une deuxième consommation d'énergie spécifique $E_{spec}2$ qui est dérivée dudit ensemble de paramètres et de l'énergie consommée par la pompe pendant ladite deuxième période de fonctionnement t2,

de détermination, sur la base desdites relations mutuelles déterminées et des paramètres B3, B4, B5 et B6 de ladite quantité, des données de sortie se présentant sous la forme d'une troisième valeur A3 de ladite quantité qui est équivalente à une troisième vitesse de pompe V3 d'une troisième période de fonctionnement t3, dans lequel

A3 est fixée à une valeur égale à A2-B3 si les conditions A2<A1 et $E_{spec}2>E_{spec}1$ sont satisfaites,

A3 est fixée à une valeur égale à A2+B4 si les conditions A2>A1 et $E_{spec}2<E_{spec}1$ sont satisfaites,

A3 est fixée à une valeur égale à A2+B5 si les conditions A2<A1 et $E_{spec}2>E_{spec}1$ sont satisfaites, et

A3 est fixée à une valeur égale à A2-B6 si les conditions A2>A1 et $E_{spec}2>E_{spec}1$ sont satisfaites.

2. Procédé selon la revendication 1, dans lequel la consommation d'énergie spécifique de ladite au moins une partie d'une station de pompage est donnée en tant que valeur prédéterminée $E_{spec}$ pour une période de fonctionnement fictive ou est calculée selon $E_{spec} = k*E$ pour une période de fonctionnement écoulée, E étant l'énergie consommée par au moins une pompe dudit nombre de pompes commandées en fréquence pendant ladite période de fonctionnement écoulée et k étant un paramètre de temps, et dans lequel la valeur A de ladite quantité est donnée en tant que valeur prédéterminée pour la période de fonctionnement fictive ou est enregistrée pour ladite période de fonctionnement écoulée.

3. Procédé selon la revendication 1 ou 2, dans lequel la première valeur A1 de ladite quantité consiste en la vitesse de pompe V1, la deuxième valeur A2 de ladite quantité consiste en la vitesse de pompe V2, et la troisième valeur A3 de ladite quantité consiste en la vitesse de pompe V3.

4. Procédé selon la revendication 1 ou 2, dans lequel la première valeur A1 de ladite quantité consiste en une première fréquence d'alimentation en courant F1, la deuxième valeur A2 de ladite quantité consiste en une deuxième fréquence d'alimentation en courant F2, et la troisième valeur A3 de ladite quantité consiste en une troisième fréquence d'alimentation en courant F3.

5. Procédé selon la revendication 1 ou 2, dans lequel la première valeur A1 de ladite quantité consiste en une première tension d'alimentation S1, la deuxième valeur A2 de ladite quantité consiste en une deuxième tension d'alimentation S2, et la troisième valeur A3 de ladite quantité consiste en une troisième tension d'alimentation S3.

6. Procédé selon l'une quelconque des revendications précédentes, dans lequel ledit ensemble de paramètres comprend ladite première valeur A1 de ladite quantité et la première consommation d'énergie spécifique $E_{spec}1$ associée, ainsi que ladite deuxième valeur A2 de ladite quantité et la deuxième consommation d'énergie spécifique $E_{spec}2$ associée.

7. Procédé selon l'une quelconque des revendications précédentes, dans lequel les paramètres B3, B4, B5 et B6 présentent des valeurs prédéterminées, dont chacune correspond à un changement de fréquence d'alimentation en courant qui est supérieur à 0,5 Hz, et inférieur à 5 Hz, de préférence inférieur à 2 Hz.

8. Procédé selon la revendication 7, dans lequel chacun des paramètres B3, B4, B5 et B6 correspond à un changement de fréquence d'alimentation en courant de 1 Hz.

9. Procédé selon la revendication 7 ou 8, dans lequel le paramètre B3 est égal au paramètre B5, et le paramètre B4 est égal au paramètre B6.

10. Procédé selon la revendication 2, dans lequel la longueur d'une période de fonctionnement est n*24 h, n étant un entier positif, et dans lequel le paramètre de temps k est calculé selon

$$k = \frac{1}{n * 24}$$

11. Procédé selon la revendication 2, dans lequel la longueur d'une période de fonctionnement est n*24 h, n étant un entier positif, et dans lequel le paramètre de temps k est calculé selon $k = \frac{1}{c*(n*24)}$, c étant un paramètre d'égalisation.

12. Procédé selon la revendication 11, dans lequel le paramètre d'égalisation c est calculé selon

$$c = \frac{x_{on}}{\sum t_{on}}$$

$x_{on}$ étant le nombre de fois qu'une pompe a été activée pendant une période de fonctionnement écoulée, et $\sum t_{on}$ étant le temps cumulé pendant lequel la pompe a été active au cours de la période de fonctionnement écoulée.

$h_{max}$

$h_{start}$

$h$

$h_{stop}$

Fig. 1

7

**Start**

T ≥ t3 —— Yes —→ Set T = 0

No

Retrieve pump station liquid level, h ←—— Run sub method: Find V3

$h < h_{stop}$ —— Yes —→ Stop pump: Set $V_{pump} = 0$

No

$h > h_{start}$ —— Yes —→ Start pump: Set $V_{pump} = V3$

No

**Return**

<u>Fig. 2</u>

Fig. 3

Fig. 4

Fig. 5

Fig. 6

**EP 2 721 303 B1**

**REFERENCES CITED IN THE DESCRIPTION**

**Patent documents cited in the description**

- WO 2009053923 A
- US 5742500 A
- US 2011081255 A